# EUROPEAN PATENT SPECIFICATION

(11) **EP 3 828 458 B1**
(45) Date of publication and mention of the grant of the patent: **31.08.2022**
(21) Application number: 20209703.6
(22) Date of filing: 25.11.2020
(51) Int. Cl.: F16L 57/00, B65D 55/02

(54) **DEVICE TO BE APPLIED IN CORRESPONDENCE OF A PASSAGE OF A FLUID**
VORRICHTUNG, DIE GEMÄSS EINES DURCHFLUSSES EINES FLUIDS ANGEWENDET WIRD
DISPOSITIF DESTINÉ À ÊTRE APPLIQUÉ DANS UNE CORRESPONDANCE D'UN PASSAGE DE FLUIDE

(30) Priority: 26.11.2019 IT 201900022182
(43) Date of publication of application: 02.06.2021
(73) Proprietor: Pietro Fiorentini S.p.A., 36057 Arcugnano (VI) (IT)
(72) Inventor: FERRARI, Mauro, 20088 ROSATE (MILANO) (IT); VIANELLO, Mario, 20088 ROSATE (MILANO) (IT)
(74) Representative: Braidotti, Andrea

(56) References cited:
- EP-A1- 0 382 606
- EP-A1- 3 633 135
- DE-A1- 3 042 839
- DE-T5-112014 006 048

## Description

The present invention relates to a device to be applied in correspondence with a passage of a fluid, in particular of gas, water, oil or other liquids in general. Preferably, said device is suitable for being applied in correspondence with the terminal portion of a gas passage, in particular of the type intended to act as an integrity seal for the closure of said gas passage and, preferably, to isolate said closure from the external environment.

Currently, gas distribution companies, in particular natural gas, are suffering significant economic losses mainly due to illegal and unauthorized consumption.

In particular, these situations mainly occur when the users, previously disconnected from the gas distribution network, are then reconnected to that network in an illegal way and without giving appropriate notice to the company that manages the gas distribution network.

In fact, in most cases, the supply of gas to the consumers is interrupted due to the non-fulfillment, by the operators of these consumers, of the related legal obligations envisaged at a regulatory or contractual level, for example by not paying the related bill, manipulating the gas meter, etc. In particular, in these cases, the gas distribution company has the right to disconnect the user, which means - from a technical point of view - removing the gas meter and the pressure regulator, and close and seal the corresponding end of the gas supply (delivery) piping.

However, after this disconnection, the gas distribution company has no legal authority to enter the property in order to verify whether the end of the supply pipe, which had previously been closed and sealed, is intact or whether there have been any manipulation and tampering.

Furthermore, it should also be considered that there is an illegal market for reconnecting previously disconnected users to the gas distribution network. In particular, in this context, pressure regulation solutions are sometimes used which do not guarantee safe operation and which are not suitable for the particular application and, as such, constitute a safety hazard.

To date, in the presence of these situations of unauthorized/illegal reconnection of previously disconnected users, the distribution companies do not have any concrete evidence or proof to be able to initiate legal proceedings against the operators of these users.

For example, consider that, in Hungary alone, in 2017 there were approximately 125,000 users who were disconnected from the gas distribution network. If even just 5% of these users were to be illegally reconnected to the distribution network, and assuming an average gas consumption of about 2000m³ per year, the resulting loss for the gas distribution company would be around 4 million euros per year.

Currently, no solution is available to prevent and/or detect such situations of illegal reconnection of previously disconnected gas consumers.

In view of this, there is therefore the need to have a device available that the gas distribution company can install within the private property of the disconnected user and that at the same time can detect an illegal reconnection to the gas distribution network, thus providing appropriate and concrete evidence and proof to be able to take legal action.

DE112014006048 describes a device for covering a fitting which comprises a first covering body which is removably joined around a duct, with a second covering body and which is provided externally with a fitting section connected to said duct.

EP0382606 describes a closing ring for ducts which includes two complementary portions which are made in a single molded piece and are connected to each other by a section that defines the articulation of one portion with respect to the other.

EP3633135 discloses a protection device for the terminal portion of a pipe which comprises a cylindrical sleeve body with an internal cavity for receiving the terminal portion of the pipe and with an engagement portion configured so that the body splits axially into two half-shells which are held together by a suitable joint.

The purpose of the invention is to propose a device to be applied in correspondence with the terminal portion of a fluid passage, in particular of gas or water or oil or other liquid in general, which isolates the closure and/or the mouth from the external environment at the outlet of said fluid passage and at the same time acts as an integrity seal for the closure of said passage.

Another purpose of the invention is to propose a device which allows to visually and clearly detect an attempt to tamper with or alter the closure made at the outlet mouth of a passage of a fluid, in particular gas or water, and which, in particular, detects an attempted tampering or alteration aimed at illegally reconnecting a fluid, in particular gas or water supply pipe, to a user.

Another object of the invention is to propose a device that protects and prevents tampering and/or alteration of the closure made at the outlet of a duct for the passage of a fluid, in particular gas or water, that had previously been disconnected from a corresponding user.

Another object of the invention is to propose a device which also defines a closure of the outlet mouth of a passage of a fluid, in particular of gas or water.

Another object of the invention is to propose a device which also defines a further seal for the fluid, in particular gas or water, which emerges from said passage and which, in particular, defines a closure which is additional to the one provided directly at the outlet of said passage.

Another object of the invention is to propose a device which can be installed and assembled quickly and simply, as well as without the need to have and/or use dedicated tools.

Another object of the invention is to propose a device that can be installed in correspondence with the terminal portion of a passage of a fluid, in particular of gas or water, even by unskilled personnel.

Another object of the invention is to propose a device that has high safety standards, in particular in terms of sealing the fluid, in particular gas or water.

Another object of the invention is to propose a device which can be manufactured simply, quickly and at low costs.

Another object of the invention is to propose a device which is an improvement and/or alternative to any other traditional solutions.

Another object of the invention is to propose a device that can be used as proof/evidence of an attempted tampering and/or alteration carried out on the terminal portion of a duct for the passage of a fluid, in particular of gas or water.

Another object of the invention is to propose a device which also acts as a monitoring device.

Another object of the invention is to propose a device which also acts as a sensor for detecting data of the fluid, in particular of gas or water, in correspondence with the terminal portion of a duct for the passage of said fluid.

Another object of the invention is to propose a device which also acts as a detector of fluid leaks, in particular of gas or water, in correspondence with the terminal portion of a duct for the passage of fluid, in particular of gas or water.

Another purpose of the invention is to propose a device which also acts as a sensor to detect environmental parameters, for example relative to the fluid (in particular relative to a gas or water) and/or to other useful parameters (for example the temperature) of the external/internal environment, in correspondence with the terminal portion of a fluid passage duct.

All these purposes, either alone or in any combination thereof, and others that will result from the following description are achieved, according to the invention, with a device as defined in claim 1.

The invention is defined in claim 1, whereas advantageous concepts of the invention are set out in claims 2-15.

The present invention is further clarified hereinafter in some of its preferred embodiments reported for purely illustrative and non-limiting purposes with reference to the attached drawing tables, in which:
- Figure 1: shows a perspective view of a device according to the invention,
- Figure 2: shows a vertical section of the device of fig. 1,
- Figure 3: shows the device of fig. 1,
- Figure 4: shows an exploded view of the device of fig. 1,
- Figure 5: shows in vertical section a piece of the casing of the device of fig. 1,
- Figure 5b: shows in plan the piece of fig. 5a,
- Figure 6a: shows in vertical section the other piece of the casing of the device of fig. 1,
- Figure 6b: shows in plan the piece of fig. 6a,
- Figure 7a: shows in vertical section the cap of the device of fig. 1,
- Figure 7b: shows a plan view of the cap of fig. 7a,
- Figure 8a: shows a side view of a different embodiment of the closure device according to the invention,
- Figure 8b: shows a different side view of the device of fig. 8a,
- Figure 9: shows a vertical section of the device of fig. 8a,
- Figure 10: shows a view obtained according to section XX of fig. 8a,
- Figure 11: shows an exploded view of the device of fig. 8a,
- Figure 12: shows it exploded in a different perspective view.

As can be seen from the figures, the device 2 to be applied in correspondence with the terminal portion 4 of a passage 3 of a fluid, in particular of gas or water or oil or other liquid in general, comprises at least two pieces 5, 6 which are provided with means of mechanical engagement 11. In particular, said means 11 are configured to allow the joining of said pieces to each other around said terminal portion 4 and thus define a casing 8 which is closed and which is fixed, preferably hanging, to said terminal portion 4. Conveniently, said means 11 are configured to mechanically join the two pieces 5, 6 together without requiring additional elements external to the pieces themselves, such as screws or the like, and in particular this mechanical engagement is defined by the interaction of respective members obtained/integrated into the pieces themselves.

Conveniently, said casing 8 comprises inside a chamber 9 in which the outlet 10 of said terminal portion 4 of the passage 3 of a fluid is intended to be completely housed. Preferably, said casing 8 is hermetically closed and, therefore, the chamber 9 is thus completely isolated from the external environment 1.

In particular, the device 2 is of the type intended to be installed in correspondence with a terminal portion 4 defined by the end of a gas passage duct 3, preferably a gas delivery duct to a user, and/or defined by an attachment 13 defining a gas passage 3 and connectable/connected to one end of a gas duct, for example to the gas delivery duct. Conveniently, the device 2 can also be installed in correspondence with the terminal portion of a duct for the passage of a liquid, in particular of water, preferably of a duct for delivering water to a user.

Conveniently, said at least two pieces 5, 6 - once joined together by means of mechanical engagement means 11 - define said casing 8. In particular, the two pieces 5, 6 are configured to embrace and laterally wrap, at least in part, said terminal portion 4 of passage 3.

Advantageously, as illustrated in the figures, said casing 8 is defined by the union of two pieces 5 and 6, however it is also understood that - in a further embodiment not shown here - it could be defined by three or more pieces joined together by means of said mechanical engagement means 11.

Conveniently, the chamber 9 - containing the outlet mouth 10 of the terminal portion 4 of the fluid passage 3 - is entirely defined inside said casing 8.

Advantageously, the terminal portion 4 comprises an attachment 13, which is externally threaded, and around which a connecting element 14 is screwed, for example a nut, which is internally threaded.

Advantageously, to close the outlet 10 of the terminal portion 4 of the passage 3 of the fluid, a closure plug 15 is provided which, preferably, is threaded externally and is screwed onto the connecting element 14. In substance, the connecting element 14 connects the closing cap 15 to the outlet 10 of the terminal portion 4 of the fluid passage 3. Preferably, a gasket 16 is interposed between the connecting element 14 and the closure cap 15 which is suitably retained and compressed by screwing the closure cap to the connecting element. Preferably, the connecting element 14 and/or the closing cap 15 is made of metal.

Conveniently, therefore, inside the chamber 9 defined by the union, around the terminal portion 4, of the two pieces 5 and 6, the closing cap 15 and the connecting element 14 are also entirely housed, which therefore - a once the two pieces 5,6 are joined together - are separated from the external environment 1 and, in particular, are not accessible from the outside. More in detail, advantageously, in this way, any access from the outside to the connecting element 14 is prevented and, therefore, also the possibility of rotating it so as to be able to unscrew the closing cap 15.

Advantageously, each of the two pieces 5, 6 is shaped so that their mutual union defines a casing 8 having a substantially cylindrical or frusto-conical shape.

Conveniently, the two pieces 5, 6 comprise corresponding portions 17' and 17" - which, preferably together define the base of said casing 8 having a substantially cylindrical or frusto-conical shape - which are shaped in such a way as to define/delimit, following the union of said two pieces, a through opening 18 of shape and size substantially corresponding to or slightly larger than the diameter of at least one cross section of the terminal portion 4 of the fluid passage 3, preferably of the diameter of the inlet section of said attachment 13. Preferably, the through opening 18 has a shape and size such as not to allow the insertion of a screwdriver inside said opening 18 when the latter is crossed by said terminal portion, preventing or making it impossible any attempt to tamper with and remove the casing 8 by forcing - for example by levering with a screwdriver - the separation between the two pieces 5 and 6 of or casing.

In particular, the two pieces 5, 6 have corresponding semicircular recesses, facing each other, which - following the union of the two pieces - define a through opening 18, of a substantially circular shape, for the insertion/crossing of the terminal portion 4, having a substantially circular section, of passage 3.

Conveniently, once the two pieces 5, 6 are joined around the terminal portion 4 of the fluid passage 3 so that said section passes through the through opening 18, it can also be applied some sealing material in correspondence of any play present between the edges of the through opening 18 and said terminal portion 4, to thus define a hermetic seal of the chamber 9.

Advantageously, the two pieces 5, 6 are internally provided with ribs 19 which, once the two pieces are mutually joined and thus define the chamber 9, develop inside the chamber itself and are configured to cooperate with the connecting element 14 (for example a nut) for its fixing and/or support, and are preferably configured to prevent rotation of the casing 8, and therefore of the device, with respect to said connecting element 14 and, preferably, to avoid the rotation of said connecting element 14 inside the chamber 8.

Preferably, the ribs 19 defined in each of the two pieces have a semianular conformation which, once the two pieces 5, 6 are joined together, define a single rib with an annular conformation.

Conveniently, a rib 19'is provided in each of the two pieces 5, 6 which is spaced apart from the corresponding upper base so that the connecting element 14 can be inserted and locked between said rib and the base of the casing 8 defined by the servings 17', 17". In particular, for this purpose, the connecting element 14 rests on the rib 19'.

Conveniently, as said, said at least two pieces 5,6 are provided with mechanical engagement means 11, preferably interlocking, to join together said two pieces 5,6.

The mechanical engagement means 11 are configured so that, once said mechanical engagement has been defined/activated, it can be removed - and therefore the pieces 5,6 can be disjoined - only by breaking, at least in part, or by visibly damaging/the pieces themselves and/or said means 11. In other words, said means 11 are configured to define a non-removable engagement and thus join the pieces 5, 6 irreversibly, if not causing their corresponding breakage or damage.

Preferably, moreover, said first mechanical engagement means 11 are configured so as not to require any tools (for example screwdriver or wrench) to define/activate said engagement and, in particular, only require the application of a pushing action which can be exercised manually by the operator.

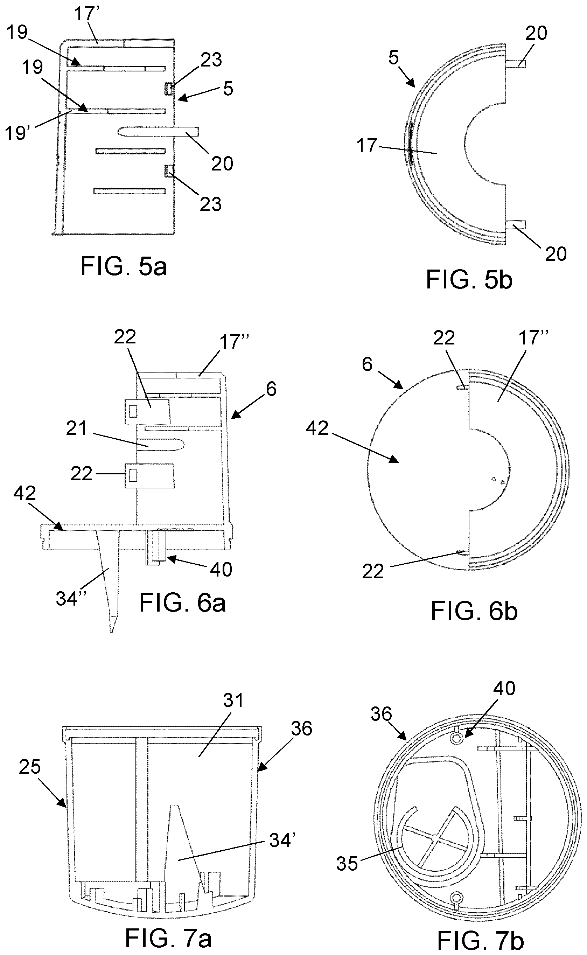

Preferably, said first mechanical engagement means 11 are configured to define a snap-fit and/or press-fit engagement of corresponding members, provided in one of the two pieces, with/within suitable counter-members provided in the other piece. For example, said first engagement means 11 can comprise a peg 20 which protrudes from the edges of the side walls of a piece 5 (see fig. 6a and 6b) and which is configured to engage by interference within a corresponding cavity 21 provided in the other piece 6 (see fig. 7a and 7b). Again, said first engagement means 11 may comprise a tab 22, which protrudes from the edges of the side walls of a piece 6 (see fig. 7a and 7b), and which is provided with an opening within which it engages by snap a corresponding protuberance 23 provided on the side walls of the other piece 5 (see fig. 6a and 6b).

Conveniently, the device 2 also comprises a cap 25 which internally delimits/defines a further chamber 31. Conveniently, said cap 25 is mechanically associable/associated with the casing 8. Conveniently, said further chamber 31 is fluidically and/or mechanically separated and is independent with respect to the first chamber 9.

Preferably, the electronic board 32 and/or in general other electronic components of the device 2 are contained inside the cap. Therefore, preferably, the electronic board 32 and/or in general the other electronic components are contained in a cap 35 which is separate and distinct from the casing 8 and from the external environment and, advantageously, this allows - in addition to protection from the external environment - also greater safety against tampering since, even once opened/once the casing 8 has been removed, the electronic board 32 and/or in general the other electronic components are not directly accessible.

Advantageously, therefore, the device 2 comprises a first half-shell 12, which is defined by said casing 8, and a second half-shell 30, which is defined by the cap 25.

Advantageously, an electronic board 32 is housed in said further chamber 31, preferably a printed circuit board (in English "printed circuit board", called "PCB"). Preferably, said electronic board 32 comprises an electronic control and/or processing unit of said device 2. Preferably, said electronic board 32 comprises an electronic unit (for example a microcontroller or microprocessor) for controlling and/or processing the received data by sensors with which said device can be provided. In particular, a software is loaded and executed in said electronic unit for the control/command of the electronic components of the device and/or to process and/or send out the data received from sensors installed in the device itself or connected to it.

Preferably, the device 2 may be provided, for example:
- an accelerometer, and/or
- a gyroscopic sensor or a magnetic field sensor or other sensor designed to detect changes in orientation.

Preferably, the device 2 can also comprise at least one sensor, for example of temperature and pressure, for detecting parameters of the fluid, and in particular of the gas, through the passage 3.

Advantageously, the device 2 can also comprise at least one sensor, for example temperature and/or pressure and/or humidity and/or acoustic noise, to detect parameters of the environment in which the device is installed.

Advantageously, the device 2 can also comprise at least one sensor configured to detect the concentration of harmful gases (for example methane, propane or carbon monoxide) in the ambient air and/or inside the device itself.

Conveniently, said sensors, respectively for detecting parameters of the environment and/or of the gas and/or the concentration of harmful gases, are housed inside the device 2 and are mounted and/or electronically connected to the electronic control and/or processing unit.

Inside said further chamber 31, the electronic board 32 is mounted in such a way as to be inclined/angled with respect to an axis parallel or perpendicular to the earth's gravitational field.

Advantageously, the device 2 is provided with a unit for transmitting data to the outside, both at short range and at a distance to a remote unit. Conveniently, these data transmission means can be implemented and/or connected to said electronic board 32. Conveniently, said unit can be configured to act as a transceiver in order to transmit data to the outside and also to receive data (for example activation/command signals) from the outside.

Advantageously, inside said further chamber 31 there is also housed at least one electric power supply battery 33 which is electronically connected/mounted to/on said electronic board 32.

Advantageously, support means 34 are provided inside the cap 25 - for example defined by at least one protruding tab 34'from the internal side walls or from the bottom of said cap - to stably support the battery 33 and/or the electronic board 32.

Advantageously, a seat 35 is defined inside the cap 25 - for example defined by portions protruding from the internal side walls and/or from the bottom of said cap - for the electronic board 32 and/or the battery 33.

Conveniently, the cap 25 is joined to the casing 8 by means of mechanical connection 40 which, preferably, are also configured so that once said mechanical link is defined/activated, it can be removed - and therefore the cap and casing can be disjoint - only by breaking, at least in part, or damaging in a visible/evident and permanent way the pieces defining said cap and/or casing, and/or said means 40. In essence, said means 40 are configured to define a non-removable connection and thus joining the two half-shells in an irreversible way, if not causing the corresponding breakage or damage.

Conveniently, moreover, said mechanical connection means 40 are configured so as not to require any tool (for example screwdriver or wrench) to define/activate said engagement and, in particular, require only the application of a pushing action which can be exercised manually by the operator. Preferably, also the mechanical connection means 40 are configured to define a snap-fit and/or interference (press-fit) engagement of corresponding members, provided in the pieces defining the casing, with/within suitable counterparts members provided in the piece(s) defining the cap 25.

Advantageously, the casing 18 and the cap 25 are joined together - preferably in correspondence with an area 43 of the casing 18 which is opposite to that intended to be crossed by the terminal portion 4 of the fluid passage 3 - by mechanical coupling, preferably by form coupling. Conveniently, said mechanical coupling is defined by the conformation and sizing of the edges of the casing 8 and the cap 25, which are also provided with said mechanical connection means 40.

Advantageously, in correspondence with the coupling area 43 between the casing 18 and the cap 25 also provides for the application of a sealant. In particular, the shape coupling between the casing 18 and the cap 25 defines a channel 44 to be filled with a suitable sealing material.

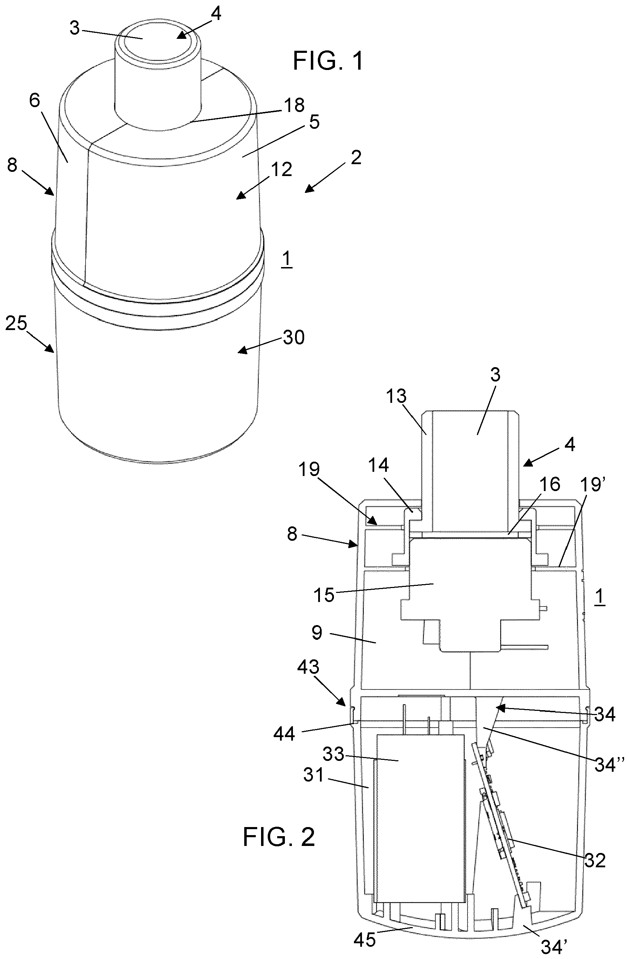

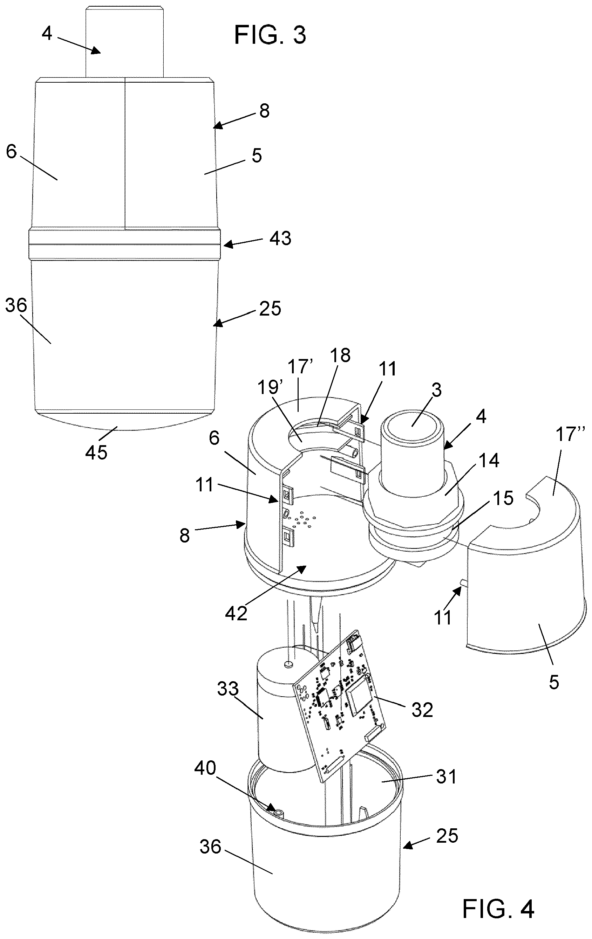

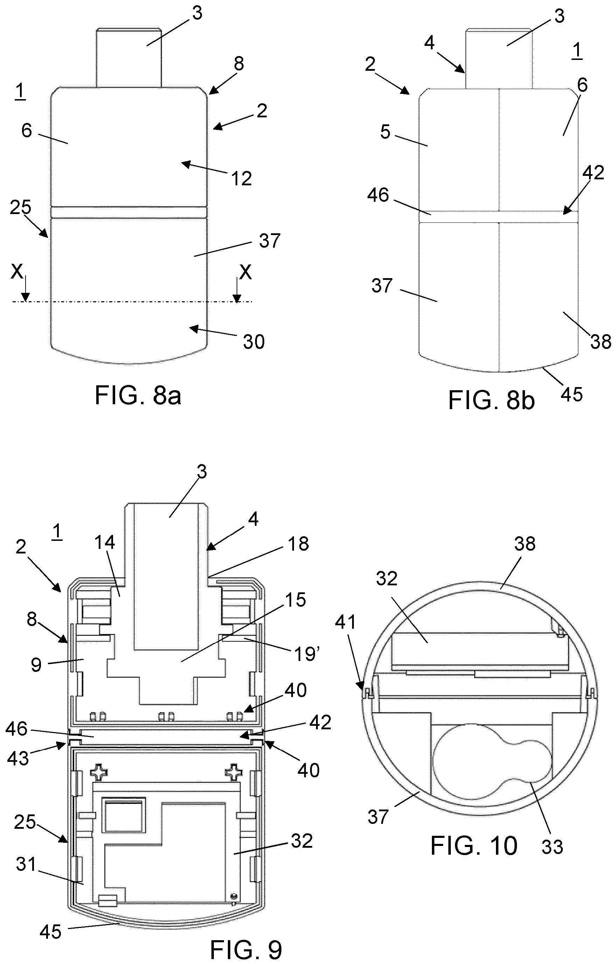

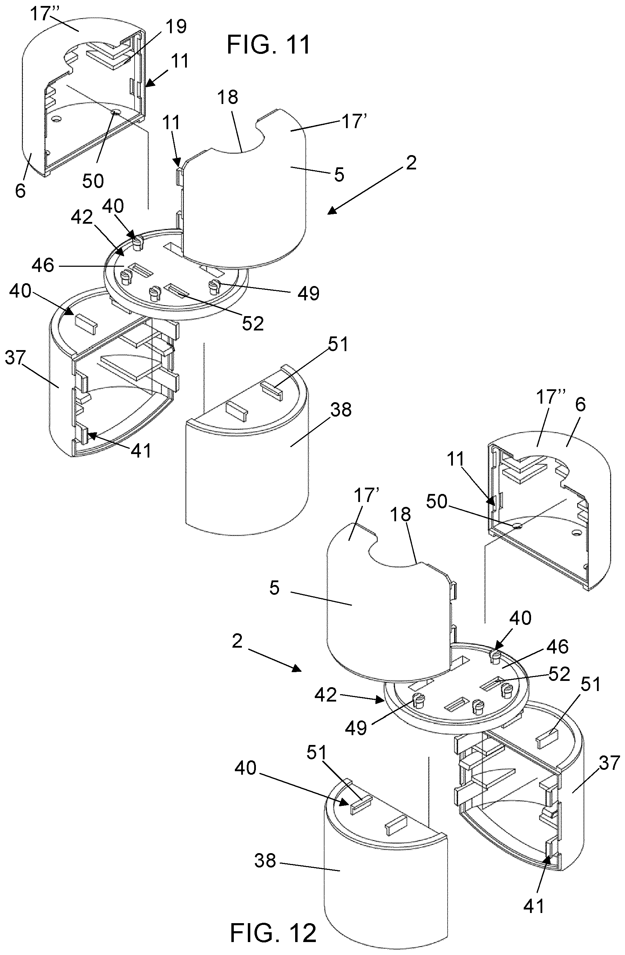

Conveniently, the cap 25 can be made in a single piece 36 (see embodiment of fig. 1-7b) or it can be made in two distinct pieces 37, 38 (see embodiment of fig. 8-12) which are provided with second mechanical engagement means 41 for their mutual union. Preferably, the second mechanical engagement means 41 for joining the pieces 37, 38 defining said cap 25 are of the same type, described above, of said first mechanical engagement means 11 for joining the pieces 5, 6 defining said casing 18.

Conveniently, also these second mechanical engagement means 41 are configured so that, once said mechanical engagement has been defined/activated, it can be removed - and therefore the two pieces 37, 38 can be separated - only by breaking, at least in part, or by visibly and permanently damaging the pieces themselves and/or said second means 41. In essence, said second means 41 are configured to define a non-removable engagement and thus join the two pieces 37, 38 irreversibly, if not causing them the corresponding breakage or damage.

Preferably, the second half-shell 30 defined by the cap 25 has a shape and dimensions substantially corresponding to those of the first half-shell 12 defined by the casing 8. Preferably, said two half-shells 12, 30 have a substantially cylindrical or truncated cone shape, or possibly parallelepiped.

Preferably, the device 2 is defined by the union of said first half-shell 12 (which is defined by the casing 8) and of said second half-shell 30 (which is defined by the cap 25) and, therefore, inside it comprises said first chamber 9, in which the outlet 10 of said terminal portion 4 is completely housed, and a further/second chamber 31 in which the electronic board 32 and, advantageously, also the electric power supply battery 33 and/or the control unit are housed data transmission and/or reception.

Advantageously, the first chamber 9 and the second chamber 31 are separate and independent from each other, i.e. they are not in mutual communication. In particular, for this purpose, a dividing wall 42 is provided which conveniently separates the casing 8 and the cap 25 from each other. Advantageously, the dividing wall 42 can be integrated and defined in a single piece with one of said two pieces 5, 6 that define the envelope 8 (see embodiment of fig. 1-7b) and/or can be made in a separate piece and distinct from all other pieces (see embodiment of fig. 8-12) and/or it can be made by joining the two pieces 5, 6 defining the envelope 8.

Conveniently, further support means 34 for the battery 33 and/or for the electronic board 32 can also be provided on the side of the dividing wall 42 intended to be turned towards the inside of the cap 25. For example, these means comprise a further fin 34' which cooperates with that provided in said cap 25 to stably support the electronic board 32 and/or the battery 33.

Advantageously, the external surface of the bottom 45 of the cap 25 - bottom 45 which is preferably defined on one side of the device 2 which is opposite to that in which said through opening 18 is provided - it is shaped in such a way as to tilt laterally and/or unbalance when placed on a flat base. In particular, for this purpose, the external surface of the bottom 45 is concave and/or rounded, and preferably has the shape of the external surface of a spherical or elliptical cap. Conveniently, the external surface of the bottom 45 can have any shape which makes it unstable vertically and horizontally when in contact with a flat base. Advantageously, in this way, the device 2 - if it were removed - could not be stably positioned on a flat base, as it would necessarily fall and this would allow the sensors (for example a gyroscope and/or accelerometer), of which the device itself is provided, to identify a case of removal of the device 2 from the terminal portion 4 of the fluid passage 3, and thus to send a corresponding alarm.

Conveniently, in the embodiment of figures 8 to 12, a further intermediate piece 46 is also provided defining the dividing wall 42 which is then intended to be joined to the first casing 8 (which is obtained by joining two pieces 5, 6) and to the cap 25 (which in Figures 8 to 12 is obtained by joining two distinct pieces 37, 38 but could also be made in a single piece 36). In particular, in this embodiment, the first casing 8 and the cap 25 are joined/associated with each other by means of the intermediate piece 46 defining the dividing wall 42; suitably, in this case, the mechanical connection means 40 are configured to cause a connection between said casing 8 and the dividing wall 42 (preferably at one of its first faces) and, also, between the cap 25 and the dividing wall itself 42 (preferably in correspondence with its other face).

More in detail, also in this case, the mechanical connection means 40 are of the type described above. Preferably, said mechanical connection means 40 comprise male-type members (for example mushroom-shaped pins 49) provided in the dividing wall 42 intended to engage by interlocking, preferably snap-fit, into corresponding female-type members (for example through holes 50) provided in the pieces 5, 6 defining the envelope 8, or vice versa. Preferably, said connection means 40 comprise male-type members (for example folded sides 51) provided in the piece 36 and/or in the pieces 37, 38 defining said cap 25 and intended to engage by interlocking, preferably by snap action, into corresponding members of female type (for example through slots 52) provided in the dividing wall 42, or vice versa.

Conveniently, the pieces 5,6 defining the envelope 8 and the piece 36 and/or the pieces 37, 38 defining the cap 25 and/or the intermediate piece 46 defining the dividing wall 42 are made of polymeric material, preferably of plastic.

The assembly of the device 2 advantageously takes place according to the following method. First, the electronic board 32 and the battery 33 are inserted inside the cap 25 and the latter is then closed, preferably still in the factory, by applying to it the piece 6 of the casing 8 which is also provided with said dividing wall 42 (cf. embodiment of fig. 1-7b) or by applying to it the intermediate piece 46 defining the dividing wall 42 and then only one of the two pieces 5,6 (see embodiment of fig. 8-12); suitably, in this way, already in the factory, a partially pre-assembled device is thus obtained (ie defined by the cap 25 and by only one of the two pieces defining the casing 8) which is then completed/closed only on site by joining, around the terminal portion 4 of the fluid passage 3 (preferably already closed by means of the closure cap 15), the other piece 5 or 6 of the casing 8 to the partially pre-assembled device.

Conveniently, the activation of the device 2 takes place on site, once it has been installed/closed around the terminal portion 4 of the fluid passage 3, by means of a magnet and by touching a predefined point provided in the cap.

Advantageously, as mentioned, once installed/closed around the terminal portion 4 of the fluid passage 3, the casing 8 and/or the cap 25 of the device 2 can be opened/disassembled/detached only causing breakage and/or damage in a visible and permanent way parts of the device itself.

From what has been said it is clear that the device according to the invention is particularly advantageous in that:
- it can be easily and quickly applied around the terminal portion of passage of a fluid (in particular of a gas or water or oil or other liquid in general); in particular, its pieces can be coupled together without requiring the use of any tools,
- defines an additional safety and sealing element (which is additional to the closing cap applied at the outlet of the gas passage) to prevent fluid (in particular gas or water) from escaping to the external environment safety,
- protects and prevents direct access to the terminal portion of the fluid passage (in particular gas or water), thus preventing its tampering,
- allows to detect any tampering carried out in correspondence with the terminal portion of the fluid passage (in particular gas or water) since, once applied around said section, it can only be removed by damaging it or causing its mechanical breakage, even partial, which is therefore easily visible,
- it is economical since it consists of a small number of components which are simple to manufacture and of low cost, and which can be easily produced in series.

## Claims

1. Device (2) to be applied in correspondence with a passage (3) of a fluid, such as gas, water, oil or other liquid in general, in particular in correspondence with the terminal portion (4) of a passage (3) of a fluid, preferably of the type intended to act as an integrity seal of the closure (15) of said passage (3) and to isolate said closure (15) from the external environment, said device comprising at least two pieces (5, 6) which are provided with mechanical engagement means (11) configured to allow the mutual union of said at least two pieces (5, 6) around said terminal portion (4) and thus define a casing (8) which is fixed, preferably hanging, to said terminal portion (4), and in which:
- said casing (8) comprises in its interior a chamber (9) in which is intended to be completely housed the outlet mouth (10) of the terminal portion (4) of said passage (3),
- said mechanical engagement means (11) are obtained in said at least two pieces (5, 6) and are configured so that, once said mechanical engagement has been defined/activated and thus joined together said at least two pieces (5, 6), said at least two pieces (5,6) can be disunited only by breaking, at least in part, or by visibly and permanently damaging said at least two pieces (5, 6) and/or said mechanical engagement means (11), and **characterized by** comprising a cap (25) which can be associated and/or is associated with said casing (8), within said cap (25) a further chamber (31) being defined which is separate and independent from said chamber (9).

2. Device according to claim 1, **characterized in that** said at least two pieces (5, 6) comprise corresponding portions (17', 17") which are shaped so as to define/delimit, following the union of said at least two pieces (5, 6), a through opening (18) having a shape and dimensions substantially corresponding to or slightly larger than the diameter of at least one cross section of the terminal portion (4) of said passage (3).

3. Device according to one or more of the preceding claims, **characterized in that** said at least two pieces (5, 6) are internally provided with at least one rib (19, 19') configured to fix and/or support a connecting element (14) configured to constrain a closure cap (15) to the outlet (10) of the terminal portion (4) of said passage (3), said chamber (9) being configured to house said connecting element (14) inside it and said closing cap (15).

4. Device according to one or more of the preceding claims, **characterized in that** said further chamber (31) contains an electronic board (32) and/or an electric power supply battery (33).

5. Device according to the preceding claim, **characterized in that** inside the cap (25)
- a seat is defined for the electronic board (32) and/or said battery (33), and/or
- support means (34) are provided for stably supporting said electronic board (32) and/or said battery (33).

6. Device according to claims 4 or 5, **characterized in that**, inside said further chamber (31), the electronic board (32) is mounted so as to be inclined/angled with respect to an axis parallel or perpendicular to the terrestrial gravitational field.

7. Device according to one or more of the preceding claims, **characterized in that** it comprises mechanical connection means (40) for joining said cap (25) to said casing (8), and **in that** said mechanical connection means ( 40) are obtained in said pieces (5, 6, 36, 37, 38) defining said casing (8) and said cap (25), or in an intermediate connecting piece (46) of said casing (8) to said cap (25) and are configured so that, once said mechanical connection has been defined/activated and thus joined together the pieces (5, 6, 36, 37, 38), the pieces themselves can be disunited only by breaking, at least in part, or by visibly and permanently damaging said pieces (5, 6, 36, 37, 38) and/or said mechanical connection means (40).

8. Device according to one or more of the preceding claims, **characterized in that**, between said casing (8) and said hood (25), a dividing wall (42) is interposed which is made in a single piece with one of the pieces (5, 6) defining said casing (8) and/or is made in an intermediate piece (46) separate from the pieces defining said casing (8) and said cap (25), and/or is defined by the union of the pieces defining said first casing (8).

9. Device according to one or more of the preceding claims, **characterized in that** said casing (8) defines a first half-shell (12) and said cap (25) defines a second half-shell (30) and **in that** said first half-shell (12) and said second half-shell (30) have a substantially corresponding shape and size.

10. Device according to one or more of the preceding claims, **characterized in that** said cap (25) is made in a single piece (36) or in at least two pieces (37, 38) provided with second mechanical engagement means (41) configured to allow the mutual union of said at least two pieces (37, 38) to thus define said cap (25).

11. Device according to one or more of the preceding claims, **characterized in that** the bottom outer surface (45) of the device itself, which is preferably defined by the cap bottom (25), is shaped so as to incline laterally and/or overreach when placed on a flat base.

12. Device according to one or more of the preceding claims, **characterized in that** all the engagement means (11, 40, 41) for joining the pieces (5, 6, 36, 37, 38) defining said casing (8) and/or said cap (25), and the connection means (40) for joining said casing (8) to said cap (25) are configured so as not to require any external and additional fastening element with respect to the pieces to be joined and so as not to require any tools to define/activate said engagement and/or link.

13. Device according to one or more of the preceding claims, **characterized in that** all the engagement means (11, 40, 41) for joining the pieces (5, 6, 36, 37, 38) defining said casing (8) and/or said cap (25), and the connecting means (40) for joining said casing (8) to said cap (25) are configured to define a snap-fit and/or to interference (press-fit) of corresponding members, provided in one piece to be joined, with/within suitable counter-members provided in the other piece to be joined.

14. Device according to one or more of the preceding claims, **characterized in that** said casing (8) defined by the union of said at least two pieces (5, 6) is hermetically closed, said chamber (9) thus being completely isolated from the environment external (1).

15. Device according to one or more of the preceding claims, **characterized by** the fact that the shape coupling between the casing (18) and the cap (25) defines a channel (44) designed to be filled with a sealant material.

## Patentansprüche

1. Vorrichtung (2), die gemäß eines Durchflusses (3) eines Fluids wie Gas, Wasser, Öl oder einer anderen Flüssigkeit im Allgemeinen angewendet wird, insbesondere gemäß des Endabschnitts (4) eines Durchflusses (3) eines Fluids, vorzugsweise des Typs, der dazu bestimmt ist, als eine Integritätsdichtung des Verschlusses (15) des Durchflusses (3) zu wirken und den Verschluss (15) von der äußeren Umgebung zu isolieren, wobei die Vorrichtung mindestens zwei Teile (5, 6) umfasst, die mit mechanischen Eingriffsmitteln (11) versehen sind, die so konfiguriert sind, dass sie die gegenseitige Verbindung der mindestens zwei Teile (5, 6) um den Endabschnitt (4) herum ermöglichen und somit ein Gehäuse (8) definieren, das an dem Endabschnitt (4), vorzugsweise hängend, befestigt ist und wobei:
- das Gehäuse (8) in seinem Inneren eine Kammer (9) umfasst, in der die Austrittsöffnung (10) des Endabschnitts (4) des Durchflusses (3) vollständig untergebracht werden soll,
- die mechanischen Eingriffsmittel (11) in den mindestens zwei Teilen (5, 6) erhalten werden und so konfiguriert sind, dass, sobald der mechanische Eingriff definiert/aktiviert wurde und somit die mindestens zwei Teile (5, 6) miteinander verbunden wurden, die mindestens zwei Teile (5, 6) nur durch mindestens teilweises Brechen oder durch sichtbare und dauerhafte Beschädigung der mindestens zwei Teile (5, 6) und/oder der mechanischen Eingriffsmittel (11) getrennt werden können, und **dadurch gekennzeichnet, dass** sie eine Kappe (25) umfasst, die mit dem Gehäuse (8) verbunden werden kann und/oder mit diesem verbunden ist, wobei innerhalb der Kappe (25) eine weitere Kammer (31) definiert ist, die von der Kammer (9) getrennt und unabhängig ist.

2. Vorrichtung nach Anspruch 1, **dadurch gekennzeichnet, dass** die mindestens zwei Teile (5, 6) entsprechende Abschnitte (17', 17") umfassen, die so geformt sind, dass sie nach der Verbindung der mindestens zwei Teile (5, 6) eine Durchgangsöffnung (18) definieren/begrenzen, die eine Form und Abmessungen aufweist, die im Wesentlichen dem Durchmesser mindestens eines Querschnitts des Endabschnitts (4) des Durchflusses (3) entsprechen oder geringfügig größer sind als dieser.

3. Vorrichtung nach einem oder mehreren der vorstehenden Ansprüche, **dadurch gekennzeichnet, dass** die mindestens zwei Teile (5, 6) innen mit mindestens einer Rippe (19, 19') versehen sind, die so konfiguriert ist, dass sie ein Verbindungselement (14) befestigt und/oder trägt, das so konfiguriert ist, dass es eine Verschlusskappe (15) am Auslass (10) des Endabschnitts (4) des Durchflusses (3) festhält, wobei die Kammer (9) so konfiguriert ist, dass sie das Verbindungselement (14) in ihrem Inneren und die Verschlusskappe (15) aufnimmt.

4. Vorrichtung nach einem oder mehreren der vorstehenden Ansprüche, **dadurch gekennzeichnet, dass** die weitere Kammer (31) eine elektronische Platine (32) und/oder eine elektrische Versorgungsbatterie (33) enthält.

5. Vorrichtung nach dem vorstehenden Anspruch, **dadurch gekennzeichnet, dass** im Inneren der Kappe (25)
- ein Sitz für die elektronische Platine (32) und/oder die Batterie (33) vorgesehen ist, und/oder
- Stützmittel (34) vorgesehen sind, um die elektronische Platine (32) und/oder die Batterie (33) stabil zu halten.

6. Vorrichtung nach Anspruch 4 oder 5, **dadurch gekennzeichnet, dass** die elektronische Platine (32) innerhalb der weiteren Kammer (31) so angebracht ist, dass sie in Bezug auf eine Achse parallel oder senkrecht zum Erdgravitationsfeld geneigt/abgewinkelt ist.

7. Vorrichtung nach einem oder mehreren der vorstehenden Ansprüche, **dadurch gekennzeichnet, dass** sie mechanische Verbindungsmittel (40) zum Verbinden der Kappe (25) mit dem Gehäuse (8) umfasst, und dass die mechanischen Verbindungsmittel (40) in den Teilen (5, 6, 36, 37, 38), die das Gehäuse (8) und die Kappe (25) definieren oder in einem Zwischenverbindungsstück (46) des Gehäuses (8) zu der Kappe (25) erhalten und so konfiguriert sind, dass, sobald die mechanische Verbindung definiert/aktiviert und somit die Teile (5, 6, 36, 37, 38) miteinander verbunden wurden, die Teile selbst nur durch mindestens teilweises Brechen oder durch sichtbare und dauerhafte Beschädigung der Teile (5, 6, 36, 37, 38) und/oder der mechanischen Verbindungsmittel (40) getrennt werden können.

8. Vorrichtung nach einem oder mehreren der vorstehenden Ansprüche, **dadurch gekennzeichnet, dass** zwischen dem Gehäuse (8) und der Haube (25) eine Trennwand (42) eingefügt ist, die in einem Stück mit einem der Teile (5, 6) ausgeführt ist, die das Gehäuse (8) definieren, und/oder in einem Zwischenstück (46) ausgeführt ist, das von den Teilen, die das Gehäuse (8) und die Kappe (25) definieren, getrennt ist, und/oder durch die Verbindung der Teile, die das erste Gehäuse (8) definieren, definiert ist.

9. Vorrichtung nach einem oder mehreren der vorstehenden Ansprüche, **dadurch gekennzeichnet, dass** das Gehäuse (8) eine erste Halbschale (12) definiert und die Kappe (25) eine zweite Halbschale (30) definiert und dass die erste Halbschale (12) und die zweite Halbschale (30) eine im Wesentlichen entsprechende Form und Größe aufweisen.

10. Vorrichtung nach einem oder mehreren der vorstehenden Ansprüche, **dadurch gekennzeichnet, dass** die Kappe (25) in einem Stück (36) oder in mindestens zwei Stücken (37, 38) ausgeführt ist, die mit zweiten mechanischen Eingriffsmitteln (41) versehen sind, die so konfiguriert sind, dass sie die gegenseitige Verbindung der mindestens zwei Stücke (37, 38) ermöglichen, um so die Kappe (25) zu definieren.

11. Vorrichtung nach einem oder mehreren der vorstehenden Ansprüche, **dadurch gekennzeichnet, dass** die untere Außenfläche (45) der Vorrichtung selbst, die vorzugsweise durch den Kappenboden (25) definiert ist, so geformt ist, dass sie sich seitlich neigt und/oder übersteht, wenn sie auf eine flache Unterlage gestellt wird.

12. Vorrichtung nach einem oder mehreren der vorstehenden Ansprüche, **dadurch gekennzeichnet, dass** alle Eingriffsmittel (11, 40, 41) zum Verbinden der Teile (5, 6, 36, 37, 38), die das Gehäuse (8) und/oder die Kappe (25) definieren, und die Verbindungsmittel (40) zum Verbinden des Gehäuses (8) mit der Kappe (25) so konfiguriert sind, dass sie kein externes und zusätzliches Befestigungselement in Bezug auf die zu verbindenden Teile erfordern und dass sie keine Werkzeuge benötigen, um den Eingriff und/oder die Verbindung zu definieren/aktivieren.

13. Vorrichtung nach einem oder mehreren der vorstehenden Ansprüche, **dadurch gekennzeichnet, dass** alle Eingriffsmittel (11, 40, 41) zum Verbinden der Teile (5, 6, 36, 37, 38), die das Gehäuse (8) und/oder die Kappe (25) definieren, und die Verbindungsmittel (40) zum Verbinden des Gehäuses (8) mit der Kappe (25) so konfiguriert sind, dass sie eine Schnapppassung und/oder eine Presspassung von entsprechenden Elementen, die in einem zu verbindenden Teil vorgesehen sind, mit/innerhalb geeigneter Gegenelemente, die in dem anderen zu verbindenden Teil vorgesehen sind, definieren.

14. Vorrichtung nach einem oder mehreren der vorstehenden Ansprüche, **dadurch gekennzeichnet, dass** das Gehäuse (8), das durch die Verbindung der mindestens zwei Teile (5, 6) definiert ist, hermetisch geschlossen ist, so dass die Kammer (9) vollständig von der äußeren Umgebung (1) isoliert ist.

15. Vorrichtung nach einem oder mehreren der vorstehenden Ansprüche, **dadurch gekennzeichnet, dass** die formschlüssige Verbindung zwischen dem Gehäuse (18) und der Kappe (25) einen Kanal (44) definiert, der dazu bestimmt ist, mit einem Dichtungsmaterial gefüllt zu werden.

## Revendications

1. Dispositif (2) destiné à être appliqué en correspondance d'un passage (3) d'un fluide, tel que gaz, eau, huile ou autre liquide en général, notamment en correspondance avec la partie terminale (4) d'un passage (3) d'un fluide, de préférence du type destiné à assurer l'étanchéité de l'obturation (15) dudit passage (3) et à isoler ladite obturation (15) de l'environnement extérieur, ledit dispositif comprenant au moins deux pièces (5, 6) qui sont pourvus de moyens d'emboîtement mécanique (11) configurés pour permettre l'union mutuelle desdites au moins deux pièces (5, 6) autour de ladite partie terminale (4) et définir ainsi un boîtier (8) qui est fixe, de préférence suspendu, à ladite partie terminale (4), et dans lequel :
- ladite boîtier (8) comporte en son intérieur une chambre (9) dans laquelle est destinée à être entièrement logée la bouche de sortie (10) de la partie terminale (4) dudit passage (3),
- lesdits moyens d'engagement mécanique (11) sont obtenus dans lesdites au moins deux pièces (5, 6) et sont configurés de telle sorte qu'une fois ledit engagement mécanique défini/activé et ainsi assemblé lesdites au moins deux pièces (5, 6), lesdites au moins deux pièces (5, 6) ne peuvent être désassemblées que par rupture, au moins partielle, ou par endommagement visible et permanent desdites au moins deux pièces (5, 6) et/ou desdits moyens mécaniques d'engagement (11), et **caractérisé en ce qu'**il comprend un capuchon (25) qui peut être associé et/ou est associé audit boîtier (8), à l'intérieur dudit capuchon (25) une autre chambre (31) étant définie qui est séparée et indépendante de ladite chambre (9) .

2. Dispositif selon la revendication 1, **caractérisé en ce que** lesdites au moins deux pièces (5, 6) comportent des portions correspondantes (17', 17") qui sont conformées de manière à définir/délimiter, suite à la réunion desdites au moins deux pièces (5, 6), une ouverture traversante (18) ayant une forme et des dimensions sensiblement correspondant ou légèrement supérieures au diamètre d'au moins une section transversale de la partie terminale (4) dudit passage (3).

3. Dispositif selon une ou plusieurs des revendications précédentes, **caractérisé en ce que** lesdites au moins deux pièces (5, 6) sont pourvues intérieurement d'au moins une nervure (19, 19') configurée pour fixer et/ou supporter un élément de liaison (14) configuré pour contraindre un capuchon de fermeture (15) à la sortie (10) de la partie terminale (4) dudit passage (3), ladite chambre (9) étant configurée pour loger ledit élément de connexion (14) à l'intérieur de celle-ci et ledit capuchon de fermeture (15).

4. Dispositif selon une ou plusieurs des revendications précédentes, **caractérisé en ce que** ladite autre chambre (31) contient une carte électronique (32) et/ou une batterie d'alimentation électrique (33).

5. Dispositif selon la revendication précédente, **caractérisé en ce qu'**à l'intérieur du capuchon (25)
- un siège est défini pour la carte électronique (32) et/ou ladite batterie (33), et/ou
- des moyens de support (34) sont prévus pour supporter de manière stable ladite carte électronique (32) et/ou ladite batterie (33).

6. Dispositif selon les revendications 4 ou 5, **caractérisé en ce que**, à l'intérieur de ladite autre chambre (31), la carte électronique (32) est montée inclinée/inclinée par rapport à un axe parallèle ou perpendiculaire au champ gravitationnel terrestre.

7. Dispositif selon une ou plusieurs des revendications précédentes, **caractérisé en ce qu'**il comprend des moyens de liaison mécanique (40) pour joindre ledit capuchon (25) audit boîtier (8), et **en ce que** lesdits moyens de liaison mécanique (40) sont obtenus dans lesdites pièces (5, 6, 36, 37, 38) définissant ledit boîtier (8) et ledit capot (25), ou dans une pièce intermédiaire de raccordement (46) dudit boîtier (8) audit capot (25) et sont configuré pour que, une fois ladite liaison mécanique définie/activée et donc assemblée les pièces (5, 6, 36, 37, 38), les pièces elles-mêmes ne puissent être désunies que par rupture, au moins en partie, ou par visiblement et endommager de façon permanente lesdites pièces (5, 6, 36, 37, 38) et/ou lesdits moyens de liaison mécanique (40).

8. Dispositif selon une ou plusieurs des revendications précédentes, **caractérisé en ce que**, entre ledit boîtier (8) et ledit capuchon (25), une paroi de séparation (42) est interposée qui est réalisée en une seule pièce avec l'une des pièces (5, 6) définissant ladite boîtier (8) et/ou est réalisée dans une pièce intermédiaire (46) distincte des pièces définissant ladite boîtier (8) et ledit capot (25), et/ou est définie par l'union des pièces définissant ledit premier boîtier (8).

9. Dispositif selon une ou plusieurs des revendications précédentes, **caractérisé en ce que** ledit boîtier (8) définit une première demi-coque (12) et ledit capuchon (25) définit une deuxième demi-coque (30) et **en ce que** ladite première la demi-coque (12) et ladite seconde demi-coque (30) ont une forme et des dimensions sensiblement correspondantes.

10. Dispositif selon une ou plusieurs des revendications précédentes, **caractérisé en ce que** ledit capuchon (25) est réalisé en une seule pièce (36) ou en au moins deux pièces (37, 38) munies de deuxièmes moyens d'engagement mécaniques (41) configuré pour permettre l'union mutuelle desdites au moins deux pièces (37, 38) pour définir ainsi ledit capuchon (25).

11. Dispositif selon une ou plusieurs des revendications précédentes, **caractérisé en ce que** la surface externe inférieure (45) du dispositif lui-même, qui est de préférence définie par le fond du capuchon (25), est formée de manière à s'incliner latéralement et/ou à dépasser lorsqu'elle est placée sur une base plate.

12. Dispositif selon une ou plusieurs des revendications précédentes, **caractérisé en ce que** tous les moyens d'engagement (11, 40, 41) pour joindre les pièces (5, 6, 36, 37, 38) définissant ledit boîtier (8) et/ ou ledit capot (25), et les moyens de liaison (40) pour solidariser ledit carter (8) audit capot (25) sont configurés de manière à ne nécessiter aucun élément de fixation externe et supplémentaire par rapport aux pièces à solidariser et ainsi afin de ne nécessiter aucun outil pour définir/activer ledit engagement et/ou lien.

13. Dispositif selon une ou plusieurs des revendications précédentes, **caractérisé en ce que** tous les moyens d'engagement (11, 40, 41) pour joindre les pièces (5, 6, 36, 37, 38) définissant ledit boîtier (8) et/ou ledit capuchon (25), et les moyens de connexion (40) pour joindre ledit boîtier (8) audit capuchon (25) sont configurés pour définir un encliquetage et/ou une interférence (ajustement serré) des éléments correspondants, fournis en une seule pièce à assembler, avec/dans des contre-éléments appropriés prévus dans l'autre pièce à assembler.

14. Dispositif selon une ou plusieurs des revendications précédentes, **caractérisé en ce que** ledit boîtier (8) défini par l'union desdites au moins deux pièces (5, 6) est hermétiquement fermé, ladite chambre (9) étant ainsi complètement isolée de l'environnement extérieur (1).

15. Dispositif selon une ou plusieurs des revendications précédentes, **caractérisé par le fait que** le couplage de forme entre le boîtier (18) et le capuchon (25) définit un canal (44) destiné à être rempli d'un matériau d'étanchéité.
